# EUROPEAN PATENT APPLICATION

(11) **EP 3 067 839 A1**
(43) Date of publication of application: **14.09.2016**
(21) Application number: 16159297.7
(22) Date of filing: 09.03.2016
(51) Int. Cl.: G06Q 10/00

(54) **MEASUREMENT SUPPORT APPARATUS, MEASUREMENT SUPPORT METHOD, AND PROGRAM**

(30) Priority: 12.03.2015 JP 2015049164
(71) Applicant: Azbil Corporation, Chiyoda-ku Tokyo 100-6419 (JP)
(72) Inventor: MURATE, Tsuneo, Tokyo, Tokyo 100-6419 (JP)
(74) Representative: Lavoix

(57) **Abstract**

A measurement support apparatus that includes a display configured to display information; a memory that stores a measurement history indicating whether each measurement container is used for measuring a specific material; and circuitry that receives an input of information including identification information of each measurement container; displays, on the display, measurement operation information for supporting a measurement operation; controls permission and non-permission of the measurement operation; determines, on the basis of the measurement history stored in the memory, whether the measurement container corresponding to the identification information received by the circuitry has a history of use for measuring the specific material; and displays, on the display, information indicating the permission or the non-permission of the measurement operation in accordance with a result of the determination.

## Description

### FIELD

The present disclosure relates to a measurement support apparatus, a measurement support method, and a program for supporting a measurement operation to measure a quantity of a raw material in a manufacturing process or the like of a product.

### BACKGROUND

Various industrial products, such as food products and drugs, are generally manufactured by measuring required quantities of many kinds of raw materials and, for example, compounding the respective measured materials. In recent years, manufacturing execution systems (MESs) are used as systems for supporting the manufacturing in manufacturing factories and so on in which industrial products are manufactured. For example, a measurement support apparatus is used as the manufacturing execution system in a measuring process to measure each raw material in the manufacturing of an industrial product.

The measurement support apparatus is an apparatus to prevent an operation error from being made by an operator. For example, the measurement support apparatus displays a set weight of each raw material to be measured and compounded in a monitor so that the operator measures and compounds a specified raw material of a quantity within a specified allowable range (for example, refer to Japanese Unexamined Patent Application Publication No. 2001-120193).

In recent years, some known manufacturing execution systems typified by the measurement support apparatus described above have a traceability function not only to prevent an occurrence of an operation error by the operator but also to record production information management data, such as a measurement record. Use of the measurement support apparatus having the traceability function allows production information to be analyzed by using the production information management data even if a problem of a product has been found and allows the production date to be identified and quality issues to be analyzed at a later time.

A request to manufacturing sites in, for example, food markets and drug markets for management of specific raw materials has been increased in recent years. The specific raw materials are, for example, raw materials including allergic substances (allergens). For the specific raw materials, whether the specific raw materials are used is obliged or recommended to be displayed in their final products. Accordingly, the specific raw materials are managed so as not to be mixed into other raw materials in the manufacturing sites.

However, in the measuring process, the management of specific raw materials is practically performed by visual confirmation or the like of the operator and it is undeniable that the possibility of mixing of any specific raw material due to an operation error by the operator exists.

### SUMMARY

According to one aspect of the disclosure, there is provided a measurement support apparatus that includes a display configured to display information; a memory that stores a measurement history indicating whether each measurement container is used for measuring a specific material; and circuitry that receives an input of information including identification information of each measurement container; displays, on the display, measurement operation information for supporting a measurement operation; controls permission and non-permission of the measurement operation; determines, on the basis of the measurement history stored in the memory, whether the measurement container corresponding to the identification information received by the circuitry has a history of use for measuring the specific material; and displays, on the display, information indicating the permission or the non-permission of the measurement operation in accordance with a result of the determination.

### BRIEF DESCRIPTION OF THE DRAWINGS

Fig. 1 is a block diagram illustrating an exemplary configuration of a measurement management system including a measurement support apparatus according to an embodiment of the present disclosure;
Fig. 2 illustrates exemplary measurement support information displayed in a display unit in the measurement support apparatus according to the embodiment;
Fig. 3 illustrates an exemplary item master used in the measurement support apparatus according to the embodiment;
Fig. 4 illustrates an exemplary measurement container master used in the measurement support apparatus according to the embodiment;
Fig. 5 illustrates exemplary measurement container use history data used in the measurement support apparatus according to the embodiment;
Fig. 6 illustrates an exemplary specific configuration of a measurement support processing unit in the measurement support apparatus according to the embodiment;
Fig. 7 is a flowchart illustrating a measurement support process in the measurement support apparatus according to the present embodiment;
Fig. 8 illustrates exemplary error information displayed in the display unit in the measurement support apparatus according to the embodiment;
Fig. 9 illustrates other exemplary error information displayed in the display unit in the measurement support apparatus according to the embodiment; and
Fig. 10 illustrates a specific example of the system configuration of the measurement management system including the measurement support apparatus according to the present embodiment.

### DETAILED DESCRIPTION

It is an object of the present disclosure to support prevention of mixing of any specific raw material in a measuring process.

A measurement support apparatus according to an embodiment includes a display unit that displays information; a storage unit that stores a measurement history indicating whether each measurement container is used for measuring a specific raw material; an input unit that is used to input a variety of information including identification information about each measurement container; and a measurement support processing unit that causes the display unit to display measurement operation information for supporting a measurement operation and controls permission and non-permission of the measurement operation. The measurement support processing unit includes a first determiner that determines whether the measurement container corresponding to the identification information about the measurement container, which is input into the input unit, has a history of use for measuring the specific raw material on the basis of the measurement history stored in the storage unit; and a display processor that causes the display unit to display information indicating the permission or the non-permission of the measurement operation in accordance with a result of the determination by the first determiner.

In the measurement support apparatus, the display processor may cause the display unit to display information to prohibit the measurement operation using the measurement container if the first determiner determines that the measurement container corresponding to the identification information about the measurement container, which is input into the input unit, has the history of use for measuring the specific raw material and may cause the display unit to display information to permit the measurement operation using the measurement container if the first determiner determines that the measurement container corresponding to the identification information about the measurement container, which is input into the input unit, does not have the history of use for measuring the specific raw material.

In the measurement support apparatus, the storage unit may further store measurement container specification information specifying the measurement container to be used for measuring the specific raw material and the input unit may be used to input identification information about a measurement target raw material. The measurement support processing unit may further include a second determiner that determines whether the raw material corresponding to the identification information about the measurement target raw material, which is input into the input unit, is the specific raw material; and a third determiner that, if the second determiner determines that the raw material corresponding to the identification information about the measurement target raw material, which is input into the input unit, is the specific raw material, determines whether the measurement container corresponding to the identification information about the measurement container, which is input into the input unit, is the measurement container specified with the measurement container specification information. If the second determiner determines that the raw material corresponding to the identification information about the measurement target raw material, which is input into the input unit, is not the specific raw material, the first determiner may determine whether the measurement container corresponding to the identification information about the measurement container, which is input into the input unit, has the history of use for measuring the specific raw material. The display processor may cause the display unit to display the information indicating the permission or the non-permission of the measurement operation in accordance with a result of the determination by the third determiner.

In the measurement support apparatus, the display processor may cause the display unit to display information to prohibit the measurement operation using the measurement container if the third determiner determines that the measurement container corresponding to the identification information about the measurement container, which is input into the input unit, is not the measurement container specified with the measurement container specification information, and may cause the display unit to display information to permit the measurement operation using the measurement container if the third determiner determines that the measurement container corresponding to the identification information about the measurement container, which is input into the input unit, is the measurement container specified with the measurement container specification information.

In the measurement support apparatus, the measurement support processing unit may further include an updater that updates the measurement history of the measurement container used for measuring the specific raw material when the measurement of the specific raw material is performed.

A measurement support method according to an embodiment includes acquiring identification information about a measurement container to be used for measurement; reading out a measurement history of the measurement container corresponding to the acquired identification information from a storage unit; determining whether the measurement container corresponding to the acquired identification information has a history of use for measuring a specific raw material on the basis of the measurement history that is read out; causing a display unit to display information to prohibit the measurement operation using the measurement container if it is determined that the measurement container corresponding to the acquired identification information has the history of use for measuring the specific raw material; and causing the display unit to display information to permit the measurement operation using the measurement container if it is determined that the measurement container corresponding to the acquired identification information does not have the history of use for measuring the specific raw material.

The measurement support method may further include acquiring identification information about a measurement target raw material; determining whether the raw material corresponding to the acquired identification information is the specific raw material; determining whether the measurement container corresponding to the acquired identification information is the measurement container specified with measurement container specification information stored in the storage unit if it is determined that the raw material corresponding to the acquired identification information is the specific raw material; causing the display unit to display information to prohibit the measurement operation using the measurement container if it is determined that the measurement container corresponding to the acquired identification information is not the measurement container specified with the measurement container specification information; and causing the display unit to display information to permit the measurement operation using the measurement container if it is determined that the measurement container corresponding to the acquired identification information is the measurement container specified with the measurement container specification information. The determining whether the measurement container corresponding to the acquired identification information has the history of use for measuring the specific raw material may be performed if it is determined that the raw material corresponding to the acquired identification information is not the specific raw material.

The measurement support method may further include updating the measurement history of the measurement container used for measuring the specific raw material, which is stored in the storage unit, when the measurement of the specific raw material is performed.

A program according to an embodiment causes a computer to execute each step in any of the above measurement support methods.

According to the present disclosure, it is possible to support prevention of mixing of any specific raw material in the measurement process.

Embodiments of the present disclosure will herein be described with reference to the attached drawings.

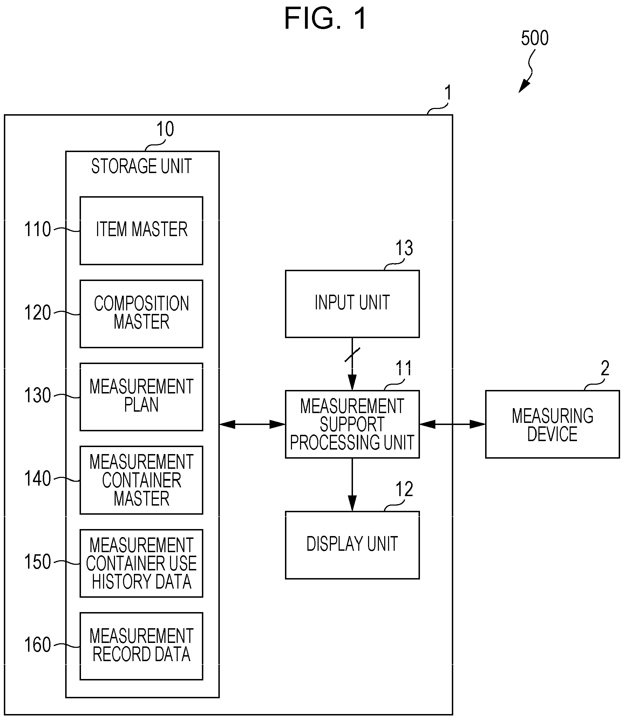

Fig. 1 is a block diagram illustrating an exemplary configuration of a measurement management system including a measurement support apparatus according to an embodiment of the present disclosure.

A measurement management system 500 illustrated in Fig. 1 is one kind of the manufacturing execution system for supporting and managing manufacturing of industrial products in a factory or the like. Specifically, the measurement management system 500 supports a measurement operation of raw materials in a manufacturing process of a food product.

Referring to Fig. 1, the measurement management system 500 includes a measuring device 2 and a measurement support apparatus 1.

The measuring device 2 is a device that measures a quantity (weight) of each raw material of, for example, a food product manufactured in a factory. The measuring device 2 is connected to the measurement support apparatus 1 and supplies a measurement result to the measurement support apparatus 1.

The measurement support apparatus 1 supports the measurement operation of raw materials by an operator. Specifically, the measurement support apparatus 1 has a function to display the name of each raw material to be measured, a measurement target value, and so on in a display unit 12 described below and a function to store a measurement record, such as measured values, measured by the measuring device 2 in a storage unit 10 described below.

The measurement support apparatus 1 also has measurement support functions to prevent a raw material other than the raw materials displayed in a package or the like of a final product from being mixed in the measurement. Specifically, the measurement support apparatus 1 has the measurement support function to cause the operator to use a special measurement container in the measurement of a specific raw material and the measurement support function to cause the operator not to use a measurement container that has been used to measure the specific raw material in the measurement of a raw material other than the specific raw material.

An example is described in the present embodiment in which the specific raw material is a raw material including an allergic substance (allergen).

The measurement support apparatus 1 will now be described in detail.

Referring to Fig. 1, the measurement support apparatus 1 includes the display unit 12, an input unit 13, the storage unit 10, and a measurement support processing unit 11.

The display unit 12 is realized by a display, such as a liquid crystal display (LCD) or a touch panel, for displaying information or a tablet terminal (a touch panel personal computer (PC)). The display unit 12 displays a variety of measurement support information for supporting the measurement operation by the operator.

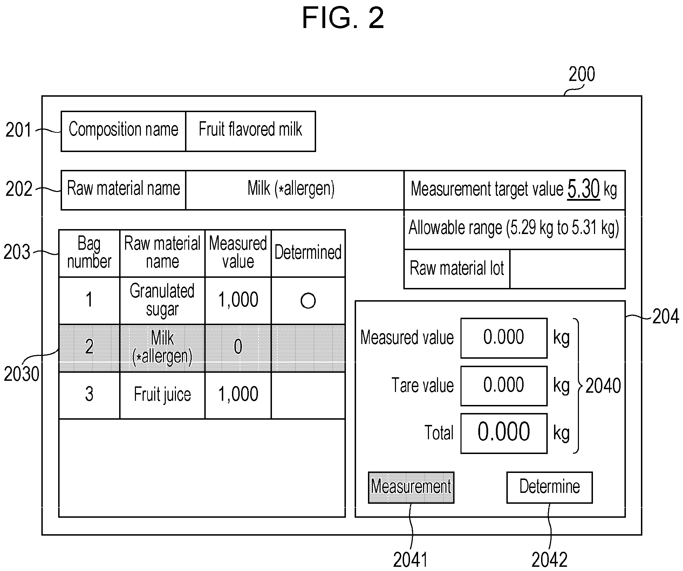

Fig. 2 illustrates an example of the measurement support information displayed in the display unit 12 in the measurement support apparatus 1 in the measurement operation.

Information necessary for the operator to perform the measurement and various icons used by the operator to input instructions to the measurement support apparatus 1 are displayed as the measurement support information in a measurement support screen 200 displayed in Fig. 2. For example, the measurement support screen 200 includes multiple display areas 201 to 204.

In the display area 201, information (for example, the name or the product code) about a product to be manufactured is displayed. In the display area 203, a variety of information about each item (raw material) necessary for manufacturing the above product is displayed in a list format. In the display area 202, information (for example, the name of the raw material, the measurement target value, and an allowable error range) about one item selected from the list displayed in the display area 203 is displayed. In the display area 204, icons accepting an instruction to execute the measurement and so on and information about measurement results are displayed. For example, measurement result information 2040, a measurement execution icon 2041 to instruct execution of the measurement, and a measurement result determination icon 2042 to instruct recording of the measurement results are displayed in the display area 204.

The input unit 13 is an input device to input information into the measurement support apparatus 1 from the outside. The input unit 13 is realized by, for example, a reader that reads out information from a radio frequency identifier (RFID) tag or a bar code reader, in addition to a keyboard, a mouse, or a touch panel.

Identification information about each raw material to be measured and identification information about each measurement container are input into the input unit 13, for example, before the measurement is performed. The identification information about each raw material to be measured is, for example, a specific raw material code or a raw material lot number added to each raw material to be measured. The identification information about each measurement container is, for example, a specific container code added to each measurement container.

Specifically, before the measurement is started, the operator inputs the raw material code, the raw material lot number, or the like stuck on a container or a bag filled with the raw material to be measured into the input unit 13 as the identification information about each raw material to be measured. In addition, before the measurement is started, the operator inputs the container code or the like stuck on the measurement container into the input unit 13 as the identification information about each measurement container. For example, when the raw material code, the container code, and so on are recorded on a bar code or an RF tag, the input unit 13, which is composed of the bar code reader or the RFID tag reader, reads out the barcode or the RFID tag to input the above pieces of identification information into the measurement support processing unit 11. When the input unit 13 is composed of a keyboard or a touch panel, the operator may operate the keyboard or the like to input the above pieces of identification information into the measurement support processing unit 11.

The storage unit 10 is composed of memories, such as a random access memory (RAM), a read only memory (ROM), a flash memory, and a hard disk. Programs and data to realize the various functions of the measurement support apparatus 1 and data about the measurement record and so on are stored in the storage unit 10.

Specifically, the pieces of data stored in the storage unit 10 are exemplified by an item master 110, a composition master 120, a measurement plan 130, a measurement container master 140, measurement container use history data 150, and measurement record data 160. These pieces of data will now be described in detail.

The item master 110 is data in which a list of raw materials to be measured is recorded.

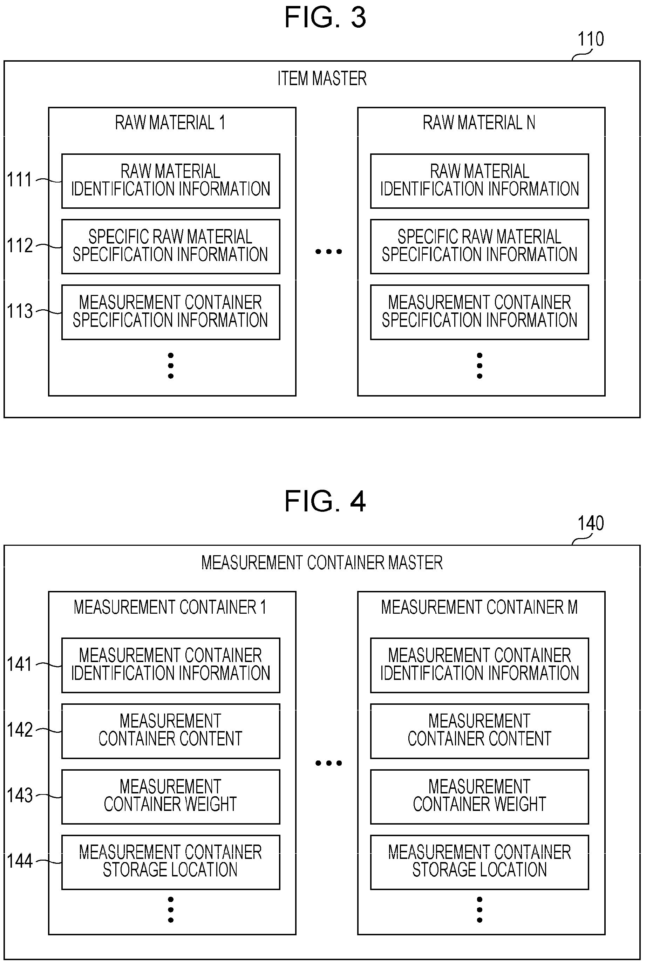

Fig. 3 illustrates an example of the item master 110.

Referring to Fig. 3, the item master 110 includes a variety of information including raw material identification information 111, specific raw material specification information 112 indicating whether the raw material is the specific raw material, and measurement container specification information 113 specifying the measurement container that should be used for the measurement of the raw material when the raw material is the specific raw material for each of raw materials 1 to N to be measured (N is a positive integer larger than or equal to two).

The composition master 120 is data indicating a list of raw materials necessary for manufacturing (compounding) each target product. For example, the composition master 120 includes the name of each raw material necessary for compounding the product, the measurement target value of each raw material, information about an allowable range indicating an error range of measured values, and packing type information.

The measurement plan 130 is information indicating a list of products (compositions). For example, the measurement plan 130 includes information about the name of each product (composition), a composition code, the amounts of composition of the entire product, and information about a measurement process of the product and a compounding process.

The measurement container master 140 is information about each measurement container (tare) used in the measurement.

Fig. 4 illustrates an example of the measurement container master 140.

Referring to Fig. 4, the measurement container master 140 includes pieces of information including measurement container identification information (container code) 141, a measurement container content 142, a measurement container weight 143, and a measurement container storage location 144 for each of measurement containers 1 to M (M is a positive integer larger than or equal to two).

The measurement container use history data 150 is data in which the use history of each measurement container is recorded.

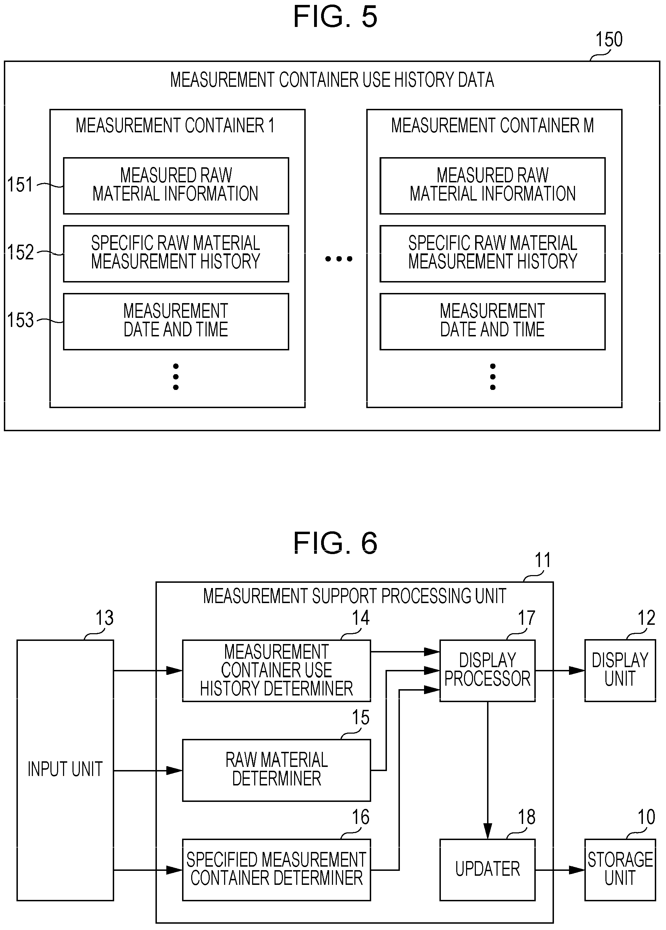

Fig. 5 illustrates an example of the measurement container use history data 150.

Referring to Fig. 5, the measurement container use history data 150 includes pieces of information including measured raw material information 151 indicating the name of each raw material (item code) measured using the container, a specific raw material measurement history 152 indicating whether the specific raw material is measured, and a measurement date and time 153 for each of the measurement containers 1 to M.

The measurement record data 160 is data in which information indicating the measurement record of each raw material is recorded. The measurement record data 160 includes, for example, the identification information about the raw material that has been measured and information indicating measurement record values of the raw material. The measurement record values indicate the quantities (weights) of the raw material measured by the measuring device 2. The measurement record values include, for example, the measured value of the raw material including the measurement container (tare), the weight of the measurement container, and the net weight of the raw material calculated by subtracting the weight of the measurement container from the measured value.

The measurement support processing unit 11 will now be described in detail.

The measurement support processing unit 11 is a functional unit that performs data processing on the basis of the data input into the input unit 13 and the data stored in the storage unit 10 to cause the display unit 12 to display the variety of measurement support information and to store the measurement results by the measuring device 2, the measurement history of the measurement container, and so on in the storage unit 10.

The measurement support processing unit 11 is composed of a program processing unit, such as a central processing unit (CPU).

Fig. 6 illustrates an exemplary specific configuration of the measurement support processing unit 11.

Referring to Fig. 6, the measurement support processing unit 11 includes a measurement container use history determiner 14, a raw material determiner 15, a specified measurement container determiner 16, a display processor 17, and an updater 18. The measurement container use history determiner 14, the raw material determiner 15, the specified measurement container determiner 16, the display processor 17, and the updater 18 are realized by, for example, program processing with the program processing unit, such as the CPU.

The measurement container use history determiner 14 is a functional portion that determines whether the measurement container corresponding to the identification information about the measurement container, input into the input unit 13, has a history of use for measuring the specific raw material on the basis of the measurement container use history data 150 stored in the storage unit 10.

The raw material determiner 15 is a functional portion that determines whether the raw material corresponding to the identification information about the raw material to be measured, input into the input unit 13, is the specific raw material.

The specified measurement container determiner 16 is a functional portion that determines whether the measurement container corresponding to the identification information about the measurement container, input into the input unit 13, is the measurement container specified by the measurement container specification information 113.

The display processor 17 is a functional portion that causes the display unit 12 to display information indicating permission or non-permission of the measurement operation in accordance with the determination results by the measurement container use history determiner 14, the raw material determiner 15, and the specified measurement container determiner 16.

The updater 18 is a functional portion that updates the measurement container use history data 150 about the measurement container used in the measurement of the specific raw material when the measurement of the specific raw material has been performed.

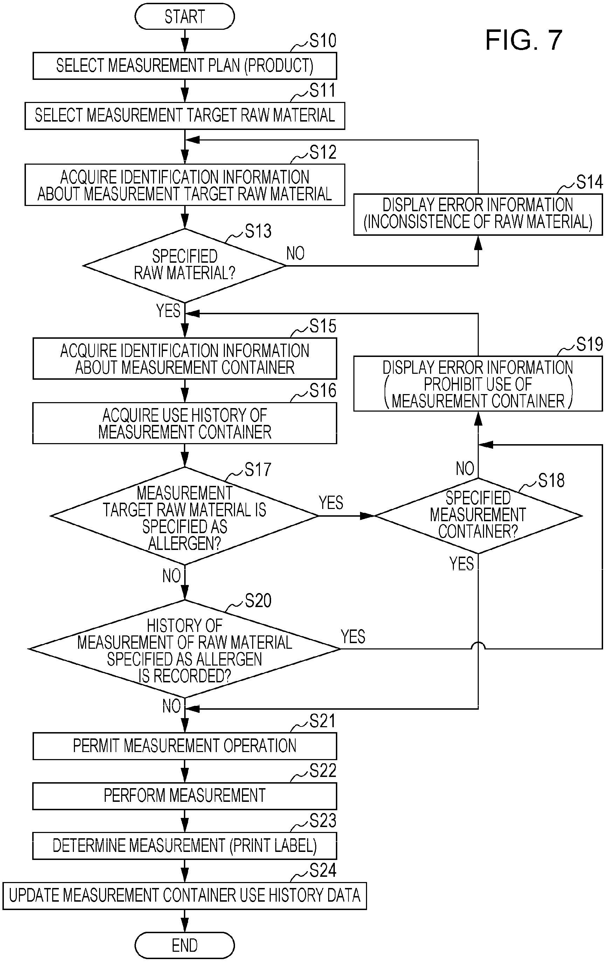

The content of processing by the measurement support processing unit 11 will now be specifically described with reference to Fig. 7.

Fig. 7 is a flowchart illustrating a measurement support process in the measurement support apparatus according to the present embodiment.

Referring to Fig. 7, in Step S10, a measurement plan (product) is selected. For example, after the measurement support apparatus 1 is started, the display processor 17 reads out the measurement plan 130 from the storage unit 10 and causes the display unit 12 to display a list of measurement plans (products) and, then, the operator performs an operation to specify a target measurement plan from the list of measurement plans displayed in the display unit 12, thereby selecting the measurement plan.

In Step S11, a measurement target raw material is selected. For example, a measurement target raw material is selected by reading out the composition master 120 corresponding to the measurement plan selected in Step S10 from the storage unit 10 to display a list of measurement target raw materials specified in the composition master 120 that is read out in the display area 203 on the measurement support screen 200 by the display processor 17 and, then, specifying one raw material from the raw material items displayed in the display area 203 by the operator.

For example, when "Fruit flavored milk" is selected as the measurement plan in Step S10, "Granulated sugar", "Milk", and "Fruit juice", which are registered as the raw materials necessary for compounding (manufacturing) "Fruit flavored milk", are displayed in the display area 203, as illustrated in Fig. 2. When "Milk", among these raw materials, is to be measured, the operator selects an area 2030 of "Milk" in the display area 203 on the measurement support screen 200. For example, in the example in Fig. 2, the color of display of the area 2030 of "Milk" in the display area 203 is reversed to indicate that "Milk" is selected.

Upon selection of the measurement target raw material, the display processor 17 reads out the item master 110 corresponding to the selected raw material to display necessary information in the display area 202. For example, "Milk" is displayed as the raw material name of the selected raw material, "5.30 kg" is displayed as the measurement target value, and "5.29 kg to 5.31 kg" is displayed as the allowable range indicating the error range of the measured values in the display area 202. When the selected raw material is specified as an allergen, the fact that the selected raw material is specified as an allergen is displayed in the display area 202.

In Step S12, the measurement support apparatus 1 acquires the identification information about the measurement target raw material. For example, as described above, the identification information about the measurement target raw material is input into the measurement support apparatus 1 by reading the bar code or the RFID tag stuck on the container or the bag in which the measurement target raw material is contained with the input unit 13, which is the bar code reader or the like, by the operator.

Upon input of the identification information about the measurement target raw material, in Step S13, the measurement support processing unit 11 determines whether the measurement target raw material is the raw material selected in Step S11. Specifically, the raw material determiner 15 determines whether the identification information (for example, the raw material lot number) about the raw material selected in Step S11 coincides with the identification information (for example, the raw material lot number) about the measurement target raw material acquired in Step S12.

If the identification information about the raw material selected in Step S11 does not coincide with the identification information about the measurement target raw material acquired in Step S12 (NO in Step S13), in Step S14, the display processor 17 causes the display unit 12 to display error information indicating that the raw material selected on the measurement support screen 200 does not coincide with the measurement target raw material. In this case, the measurement support processing unit 11 does not permit continuation of the measurement operation until the raw material selected on the measurement support screen 200 coincides with the measurement target raw material.

If the identification information about the raw material selected in Step S11 coincides with the identification information about the measurement target raw material acquired in Step S12 (YES in Step S13), in Step S15, the measurement support processing unit 11 acquires the identification information about the measurement container. For example, the display processor 17 causes the display unit 12 to display information indicating that the raw material selected on the measurement support screen 200 coincides with the measurement target raw material and to cause the display unit 12 display information prompting the operator to input the identification information about the measurement container. Upon confirmation of the above display, the operator reads the bar code or the RFID tag stuck on the measurement container with the input unit 13, which is the bar code reader or the like, to input the identification information about the measurement container into the measurement support apparatus 1.

In Step S16, the measurement support processing unit 11 accesses the measurement container use history data 150 in the storage unit 10 to read out the use history of the measurement container corresponding to the identification information about the measurement container acquired in Step S15. In Step S17, the measurement support processing unit 11 determines whether the measurement target raw material is specified as an allergen. Specifically, the raw material determiner 15 refers to the specific raw material specification information 112 in the item master 110 corresponding to the measurement target raw material specified in Step S11 (S12) to determine whether the measurement target raw material specified in Step S11 (S12) is the specific raw material (specified as an allergen).

If the raw material determiner 15 determines that the measurement target raw material is specified as an allergen (YES in Step S17), in Step S18, the measurement support processing unit 11 determines whether the measurement container corresponding to the identification information acquired in Step S15 is the specified measurement container. Specifically, the specified measurement container determiner 16 determines whether the measurement container corresponding to the identification information acquired in Step S15 coincides with the measurement container specified by the measurement container specification information 113 in the item master 110 corresponding to the measurement target raw material specified in Step S11 (S12).

If the specified measurement container determiner 16 determines that the measurement container corresponding to the identification information acquired in Step S15 is the specified measurement container (YES in Step S18), in Step S21, the measurement support processing unit 11 permits execution of the measurement operation. Specifically, the display processor 17 causes the display unit 12 to display information indicating that the measurement operation is permitted. For example, the color of the measurement execution icon 2041 on the measurement support screen 200 is reversed, as illustrated in Fig. 2, the shape thereof is changed, or a popup window is displayed on the measurement support screen 200 to indicate that the measurement operation is permitted in the display unit 12.

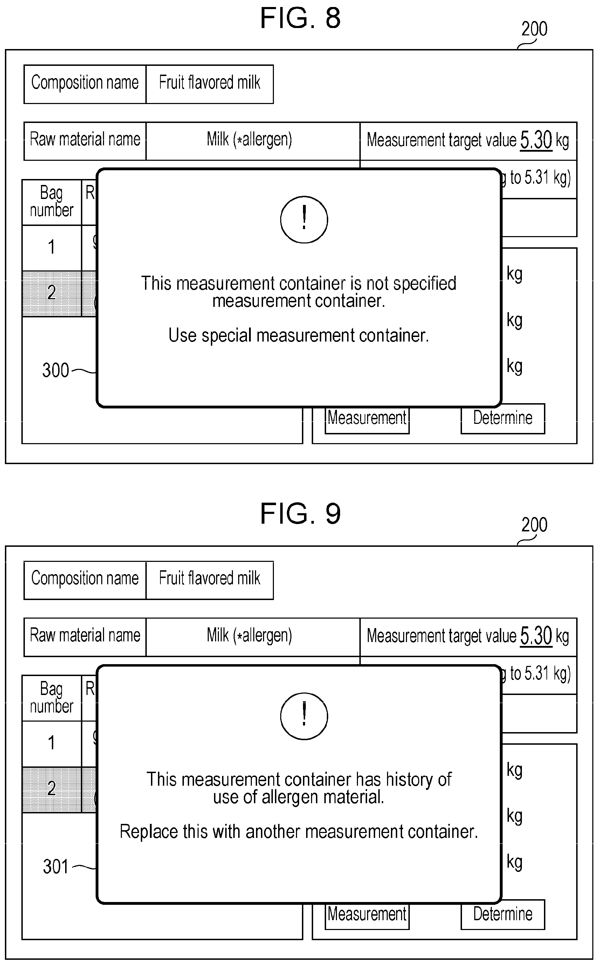

If the specified measurement container determiner 16 determines that the measurement container corresponding to the identification information acquired in Step S15 is not the specified measurement container (NO in Step S18), in Step S19, the display processor 17 causes error information indicating that use of the measurement container to be used in the measurement is prohibited, to be displayed. For example, as illustrated in Fig. 8, information indicating that the measurement container to be used in the measurement is not the specified measurement container and information prompting the user to change the measurement container to a special measurement container are displayed in the display unit 12 using a popup window 300. Then, the process goes back to Step S15 and the measurement support apparatus 1 waits for input of the identification information about the measurement container.

If the raw material determiner 15 determines that the measurement target raw material is not specified as an allergen (NO in Step S17), in Step S20, the measurement support processing unit 11 determines whether the measurement container to be used in the measurement has a history of measurement of another specific raw material (a raw material specified as an allergen). Specifically, the measurement container use history determiner 14 refers to the specific raw material measurement history 152 included in the use history of the measurement container read out in Step S16 to determine whether a raw material specified as an allergen has been measured with the measurement container.

If the measurement container use history determiner 14 determines that the measurement container has a history of measurement of a raw material specified as an allergen (YES in Step S20), the process goes back to Step S19. In Step S19, the display processor 17 causes the display unit 12 to display the error information indicating that use of the measurement container to be used in the measurement is prohibited. For example, as illustrated in Fig. 9, information indicating that another raw material specified as an allergen has been measured with the measurement container to be used in the measurement and information prompting the user to replace the measurement container with another measurement container are displayed in the display unit 12 using a popup window 301. Then, the process goes back to Step S15 and the measurement support apparatus 1 waits for input of the identification information about the measurement container.

If the measurement container use history determiner 14 determines that the measurement container does not have a history of measurement of a raw material specified as an allergen (NO in Step S20), in Step S21, the display processor 17 causes the display unit 12 to display the information indicating that the measurement operation is permitted.

After the information indicating that the measurement operation is permitted is displayed by the display processor 17, in Step S22, the operator performs the measurement operation. For example, upon putting of the measurement target raw material into the measurement container and selection of the measurement execution icon 2041 on the measurement support screen 200 by the operator, the display processor 17 reads out the measured values measured by the measuring device 2 and displays necessary information in the display area 204. At this time, the display processor 17 determines whether the measured values measured by the measuring device 2 are within the specified error range. If the measured values are within the specified error range, the display processor 17 changes the measurement result determination icon 2042 instructing completion of the measurement on the measurement support screen 200 to a state in which selection of the measurement result determination icon 2042 is available.

Upon selection of the measurement result determination icon 2042 by the operator, in Step S23, the measurement operation of the raw material is completed (the measurement is determined) and a label on which the measurement record is recorded is output from a label printer (not illustrated).

In Step S24, the updater 18 generates the measurement record data 160, stores the generated measurement record data 160 in the storage unit 10, and updates the measurement container use history data 150 in response to the selection of the measurement result determination icon 2042. For example, when the measured raw material is "Milk" specified as an allergen, the updater 18 stores the identification information about the measured "Milk" and the measured values of "Milk" in the storage unit 10 as the measurement record data 160. In addition, the updater 18 registers "Milk" as the measured raw material information 151 about the measurement container used in the measurement of "Milk", registers information indicating that "Milk" specified as an allergen has been measured as the specific raw material measurement history 152 of the measurement container, and registers the date and time when the measurement of "Milk" is performed as the measurement date and time 153. The measurement container use history data 150 that is updated is used again in the next measurement.

Upon completion of the storage of the measurement record data 160 and the update of the measurement container use history data 150, the series of steps for the measurement is completed. The measurement record data 160 and the measurement container use history data 150 recorded in the measurement operation using the measurement support apparatus 1 described above are available for reference after the measurement and may be used for statistical processing.

A specific example of the system configuration of the measurement support apparatus 1 according to the present embodiment will now be described.

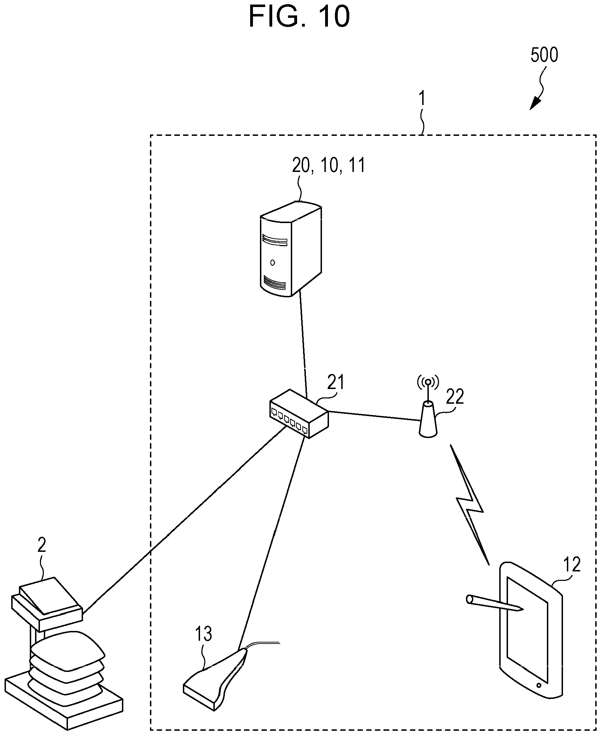

Fig. 10 illustrates a specific example of the system configuration of the measurement management system including the measurement support apparatus 1 according to the present embodiment.

The measurement support apparatus 1 is capable of being realized by a computer, which is a hardware resource, and programs installed in the computer. For example, the computer includes a program processing unit, such as a CPU; memories including a RAM, a ROM, and a hard disk drive (HDD); an input unit including a keyboard, a mouse, a pointing device, operation buttons, and a touch panel, which is used to input information from the outside; a communication unit used to transmit and receive a variety of information wirelessly or in a wired manner via a communication line, such as the Internet, a local area network (LAN), or a wide area network (WAN); and a display unit, such as an LCD.

In other words, control of the above hardware resources with the programs realizes the storage unit 10, the measurement support processing unit 11, the display unit 12, and the input unit 13 described above. The programs may be provided in a state in which the programs are recorded on a recording medium, such as a compact disk-read only memory (CD-ROM), a digital versatile disk (DVD)-ROM, or a memory card.

For example, the measurement support apparatus 1 may be realized by connecting a server 20 including the functional units serving as the measurement support processing unit 11 and the storage unit 10, the input unit 13, and the display unit 12 via a hub 21, as illustrated in Fig. 10. The display unit 12 may be connected to the hub 21 via a wireless antenna 22, as illustrated in Fig. 10, or may be connected to the hub 21 in a wired manner. The measuring device 2 may be connected to the measurement support apparatus 1 via the hub 21, as illustrated in Fig. 10.

The measurement support apparatus according to the embodiment of the present disclosure records the use history of the measurement container used in the measurement, that is, records the fact that the specific raw material, such as a raw material specified as an allergen, has been measured with the measurement container as a history and controls permission and non-permission of the use of the measurement container using the history. Accordingly, it is possible to prevent the specific raw material from being mixed in the measurement process.

In addition, the measurement support apparatus according to the embodiment of the present disclosure prohibits the measurement using a measurement container other than the specified measurement container when the measurement target raw material is registered as the specific raw material. Accordingly, it is possible to further prevent the specific raw material from being mixed in the measurement process.

Furthermore, the measurement support apparatus according to the embodiment of the present disclosure stores the use history of the measurement container used in the measurement, in addition to the measurement record data, such as the measured values, about the measured raw material, in the storage unit. Accordingly, the traceability of the measurement support apparatus is expected to be improved.

While the disclosure is described in terms of some specific examples and embodiments, it will be clear that this disclosure is not limited to these specific examples and embodiments and that many changes and modified embodiments will be obvious to those skilled in the art without departing from the true spirit and scope of the disclosure.

For example, although the case is exemplified in the above embodiment in which the measurement support apparatus 1 is used for manufacturing a food product (for example, fruit flavored milk), the above embodiment is not limited to this. The measurement support apparatus 1 is available for manufacturing of another industrial product. For example, the measurement support apparatus 1 may be used when a drug is manufactured.

Although the case is exemplified in the above embodiment in which the measurement support apparatus 1 is used in the manufacturing process of the industrial product in the factory or the like, the above embodiment is not limited to this. The measurement support apparatus 1 is capable of being widely used in other applications. For example, the measurement support apparatus 1 according to the embodiment of the present disclosure may be used also when measurement of raw materials is performed in, for example, a research institute that performs analysis of raw materials and so on.

Although the configuration is exemplified in the above embodiment in which the measurement support apparatus 1 is realized by connecting the server 20, the display unit 12, and the input unit 13 via the hub 21 (refer to Fig. 10), the above embodiment is not limited to this. For example, the storage unit 10, the measurement support processing unit 11, the display unit 12, and the input unit 13 may be realized by one PC. Alternatively, only the storage unit 10 may be provided in another server and the measurement support processing unit 11, the display unit 12, and the input unit 13 may be realized by one PC. In this case, the PC may be connected to the other server via a wired network or a wireless network.

### List of Reference Signs

- 1:: measurement support apparatus
- 2:: measurement device
- 500:: measurement management system
- 10:: storage unit
- 11:: measurement support processing unit
- 12:: display unit
- 13:: input unit
- 110:: item master
- 120:: composition master
- 130:: measurement plan
- 140:: measurement container master
- 150:: measurement container use history data
- 160:: measurement record data
- 14:: measurement container use history determiner
- 15:: raw material determiner
- 16:: specified measurement container determiner
- 17:: display processor
- 18:: updater
- 20:: server
- 21:: hub
- 22:: wireless antenna
- 111:: raw material identification information
- 112:: specific raw material specification information
- 113:: measurement container specification information
- 141:: measurement container identification information
- 142:: measurement container content
- 143:: measurement container weight
- 144:: measurement container storage location
- 151:: measured raw material information
- 152:: specific raw material measurement history
- 153:: measurement date and time
- 200:: measurement support screen
- 201, 202, 203, 204:: multiple display area
- 2040:: measurement result information
- 2041:: measurement execution icon
- 2042:: measurement result determination icon
- 301, 302:: popup window

## Claims

1. A measurement support apparatus, comprising:
a display unit adapted to display information;
a storage unit adapted to store a measurement history indicating whether each measurement container of a plurality of measurement containers is used for measuring a specific raw material;
an input unit adapted to be used to input a variety of information including identification information of a measurement container; and
a measurement support processing unit adapted to cause the display unit to display measurement operation information for supporting a measurement operation and to control permission and non-permission of the measurement operation,
wherein the measurement support processing unit includes
a first determiner adapted to determine, based on the measurement history stored in the storage unit, whether the measurement container corresponding to the identification information of the measurement container, which is input into the input unit, has the history of use for measuring the specific raw material; and
a display processor adapted to cause the display unit to display information indicating the permission or the non-permission of the measurement operation in accordance with a result of the determination by the first determiner.

2. The measurement support apparatus according to Claim 1, wherein
the display processor causes the display unit to display information to prohibit the measurement operation using the measurement container if the first determiner determines that the measurement container corresponding to the identification information of the measurement container, which is input into the input unit, has the history of use for measuring the specific raw material, and
the display processor causes the display unit to display information to permit the measurement operation using the measurement container if the first determiner determines that the measurement container corresponding to the identification information about the measurement container, which is input into the input unit, does not have the history of use for measuring the specific raw material.

3. The measurement support apparatus according to Claim 1 or 2,
wherein the storage unit further stores measurement container specification information specifying the measurement container to be used for measuring the specific raw material,
wherein the input unit is used to input identification information of a measurement target raw material,
wherein the measurement support processing unit further includes
a second determiner adapted to determine whether the raw material corresponding to the identification information of the measurement target raw material, which is input into the input unit, is the specific raw material; and
a third determiner adapted, if the second determiner determines that the raw material corresponding to the identification information of the measurement target raw material, which is input into the input unit, is the specific raw material, to determine whether the measurement container corresponding to the identification information of the measurement container, which is input into the input unit, is the measurement container specified by the measurement container specification information,
wherein, if the second determiner determines that the raw material corresponding to the identification information of the measurement target raw material, which is input into the input unit, is not the specific raw material, the first determiner determines whether the measurement container corresponding to the identification information of the measurement container, which is input into the input unit, has the history of use for measuring the specific raw material, and
wherein the display processor causes the display unit to display the information indicating the permission or the non-permission of the measurement operation in accordance with a result of the determination by the third determiner.

4. The measurement support apparatus according to Claim 3, wherein
The display processor causes the display unit to display information to prohibit the measurement operation using the measurement container if the third determiner determines that the measurement container corresponding to the identification information of the measurement container, which is input into the input unit, is not the measurement container specified by the measurement container specification information and
the display processor causes the display unit to display information to permit the measurement operation using the measurement container if the third determiner determines that the measurement container corresponding to the identification information of the measurement container, which is input into the input unit, is the measurement container specified by the measurement container specification information.

5. The measurement support apparatus according to any of Claims 1 to 4, wherein the measurement support processing unit further includes an updater that updates the measurement history of the measurement container used for measuring the specific raw material if the measurement of the specific raw material is performed.

6. A measurement support method, comprising:
acquiring identification information of a measurement container to be used for measurement;
reading out a measurement history of the measurement container corresponding to the acquired identification information from a storage unit;
determining whether the measurement container corresponding to the acquired identification information has a history of use for measuring a specific raw material based on the measurement history that is read out;
displaying, on a display, information to prohibit a measurement operation using the measurement container if it is determined that the measurement container corresponding to the acquired identification information has the history of use for measuring the specific raw material; and
displaying, on the display, information to permit the measurement operation using the measurement container if it is determined that the measurement container corresponding to the acquired identification information does not have the history of use for measuring the specific raw material.

7. The measurement support method according to Claim 6, further comprising:
acquiring identification information of a measurement target raw material;
determining whether a raw material corresponding to the acquired identification information of the measurement target material is the specific raw material;
determining whether the measurement container corresponding to the acquired identification information of the measurement container is a measurement container specified with measurement container specification information stored in the storage unit if it is determined that the raw material corresponding to the acquired identification information of the measurement target material is the specific raw material;
displaying, on the display, information to prohibit the measurement operation using the measurement container if it is determined that the measurement container corresponding to the acquired identification information of the measurement container is not the measurement container specified by the measurement container specification information; and
displaying, on the display, information to permit the measurement operation using the measurement container if it is determined that the measurement container corresponding to the acquired identification information of the measurement container is the measurement container specified by the measurement container specification information,
wherein the determining whether the measurement container corresponding to the acquired identification information has the history of use for measuring the specific raw material is performed if it is determined that the raw material corresponding to the acquired identification information of the measurement target material is not the specific raw material.

8. The measurement support method according to Claim 6 or 7, further comprising:
updating the measurement history of the measurement container used for measuring the specific raw material, which is stored in the storage unit, if the measurement of the specific raw material is performed.

9. A program causing a computer to execute each step in the measurement support method according to any of Claims 6 to 8.
